# EUROPEAN PATENT SPECIFICATION

(11) **EP 1 944 271 B1**
(45) Date of publication and mention of the grant of the patent: **26.11.2014**
(21) Application number: 07013984.5
(22) Date of filing: 17.07.2007
(51) Int. Cl.: C02F 1/04, C02F 1/40, B01D 1/18, B01D 17/02, C02F 103/32

(54) **Waste treatment process**
Abfallverarbeitungsverfahren
Procédé de traitement des eaux

(30) Priority: 15.12.2006 GR 2006100679
(43) Date of publication of application: 16.07.2008
(73) Proprietor: Avgoustopoulos, Georgios, 152 35 Vrilissia Attkis (GR); Vassilakos, Nikolaos, 172 35 Dafni Attikis (GR); Seimanidis, Savvas, 152 37 Filothei Attikis (GR)
(72) Inventor: Avgoustopoulos, Georgios, 152 35 Vrilissia Attkis (GR); Vassilakos, Nikolaos, 172 35 Dafni Attikis (GR); Seimanidis, Savvas, 152 37 Filothei Attikis (GR)
(74) Representative: Malamis, Alkisti-Irene

(56) References cited:
- EP-A- 0 295 722
- EP-A- 1 041 044
- EP-A- 1 378 491
- EP-A- 1 623 960
- WO-A-2006/058938
- ES-A2- 2 064 247
- ES-A6- 2 021 191
- A. ROZZI & F. MALPEI: "Treatment and Disposal of Olive Mill Effluents" INTERNATIONAL BIODETERIORATION & BIODEGRADATION, 1996, pages 135-144, XP002482350 Elsevier
- S. VITOLO ET AL.: "Treatment of olive oil industry wastes" BIORESOURCE TECHNOLOGY, vol. 67, 1999, pages 129-139, XP002482352 Elsevier
- C. PAREDES ET AL.: "Characterization of olive mill waste water (alpechin) and its sludge for agricultural pruposes" BIORESOURCE TECHNOLOGY, vol. 67, 1999, pages 111-115, XP002482413 Elsevier
- D. MANTZAVINOS & N. KALOGERAKIS: "Treatment of Olive Mill Effluents Part I" ENVIRONMENT INTERNATIONAL, vol. 31, 2005, pages 289-295, XP002482351 Elsevier

## Description

### 1. Field of the Invention

The present invention relates to the treatment of the liquid waste generated during the extraction of olive oil from olives. This process has traditionally been carried out in so-called "3-phase" olive mills (in Greece, this liquid waste is called "katsigaros", "liozoumi", "mourka", in Spain is called alpehin, and in Italy is called Jamila, etc.).

In the 3-phase olive mills, virgin olive oil is produced by pressing the olives and extracting them from the produced slurry with the addition of hot water. The process yields three main streams (phases), a) virgin olive oil, b) primary olive pomace and c) "katsigaros".

The katsigaros is blackish aqueous liquor containing about 5-10 % wt. of fine solids and having a high pollutant load (Biochemical oxygen demand (BOD), chemical oxygen demand (COD), etc.).
The primary olive pomace is subjected to further treatment to extract additional oil using hexane in separate secondary processing plants.

The present invention attempts to ameliorate the problems which have previously been associated with the katsigaros liquid waste (as will be described below). Advantageously, the present invention can be used to produce useful by-products of commercial value (oil, solid fuel, electricity and usable heat) during treatment of the katsigaros liquid waste (hereinafter referred to simply as "liquid waste" or "katsigaros").

### 2. Prior Art

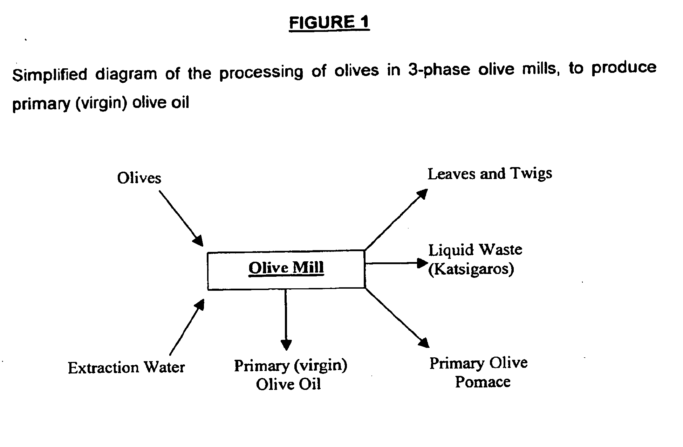

A large amount of the primary processing of olives for the production of olive oil (around the Mediterranean basin but also in other olive oil producing regions of the world) is carried out in decentralised and autonomous olive mill units; these units traditionally use the 3-phase pressing and extraction process which is briefly described above. The traditional pressing and extraction process is schematically depicted in Figure 1.

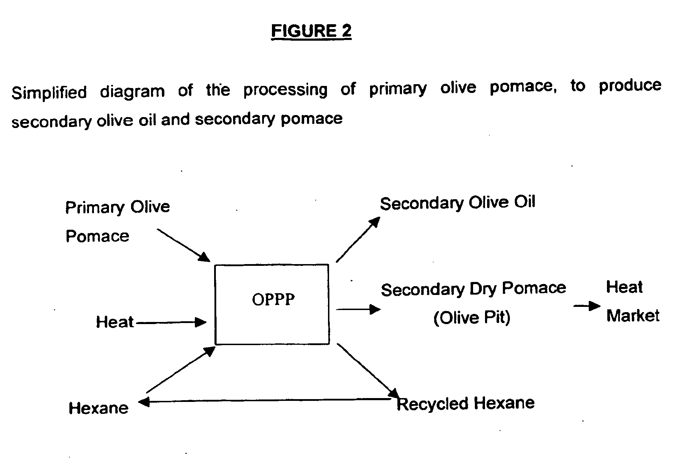

One of the by-products of the pressing and extraction process is primary olive pomace (or olive husk-gr. *pyrinas*) which still contains a significant amount of oil (6-8% wt.). This oil is further extracted by secondary processors in large agro-industrial complexes or Olive Pomace Processing Plants (OPPPs). In these plants, the watery olive pomace (moisture content approx. 40-45% wt.) is first dried and then leached with hexane. The main product of this secondary process is secondary olive oil. A significant by-product of this secondary processing is dry olive pit (gr. *pyrinoxilo*), or secondary pomace, which is a very good fuel (approx. energy content 15 MJ/kg, at 15% wt. moisture) with a significant market and value as a fuel for heating purposes (eg. homes, spaces, greenhouses, industrial facilities, etc.). The secondary processing of olive pomace is schematically presented in Figure 2.

For the most part, olive oil mills are owned and operated independently of the local agricultural unions and cooperatives. Although the cooperatives may represent a number of farmers and mills, only a few cooperatives actually own olive oil mills. The oil mill owner generally forms individual contracts with farmers in order to process the olives.
It is worth noting that in countries such as Greece, it is the individual farmer that owns the olive oil and not the owner of the oil mill; whereas, for example, in Spain is the opposite.
The processing costs (labour, fuel and depreciation costs) are borne by the processor (ie. the olive mill owner), who retains a portion of the farmer's oil as a fee (often around 8-10% of the quantity of primary oil). The remaining oil is then given to the farmer, who either sells it himself, or goes through a union or cooperative to market the oil.

The oil mill owner retains control of all by-products of olive processing (i.e. primary olive pomace, leaves and twigs and katsigaros, see Figure 1). The primary olive pomace is usually sold to the secondary processors (OPPPs, see Figure 2), while leaves and twigs, and especially katsigaros, are generally considered non-useful by-products and are frequently disposed off in a non-regulated manner which can cause significant pollution (eg. in waterways, fields, and ponds, etc.).

Katsigaros is a particularly severe environmental nuisance for three (3) main reasons (among others):
1. It is generated in very large quantities in 3-phase olive mills, due to the relatively high proportion of hot water to olives which is used for extraction purposes (e.g. 60 kg of water per 100 kg of olives). This results in a liquid effluent waste stream, the quantity of which is about 4-5 times greater than that of the primary virgin olive oil produced by the process. The actual quantity of liquid waste will depend on the particular olive extraction method utilised in the olive mill, as well as the local conditions of olive tree growth.
2. It is characterised by a very high pollutant load of organic origin (especially, difficult to breakdown phenols) and, also, by an extremely high concentration of potassium. To a lesser extent, sodium, calcium, magnesium and iron (see Table 1.1 which indicates the results of an analysis of the liquid waste (katsigaros) and is based on Tsavdaris & Georgakakis, 1988) are also present in the liquid waste. In addition, due to the low concentration of nitrogen and phosphorous in the katsigaros liquid waste, the need arises to add nitrogenous additives (to improve the poor carbon to nitrogen (C/N) ratio), as well as calcium and sodium, in order to effect a proper biological treatment of this waste (something which is rarely done, see point 3 below). It should also be noted that the pH level of the katsigaros is relatively low (4,5-5,5), making it a difficult to handle acidic solution.
3. The vast majority of the katsigaros waste generated in 3-phase olive mills is usually disposed of in uncontrolled and environmentally harmful ways which are convenient to the mill owners; for example, the liquid is thrown into nearby rivers or streams, dry river beds, open ponds, or directly onto the soil. According to existing data in Greece (Balis, 1993), 58% of all 3-phase olive mills throw their katsigaros waste in nearby streams (from where, inevitably, they end up in larger water reservoirs), 11,5% of all mills throw this waste directly into rivers or into the sea, and 19,5% onto the soil.

**TABLE 1.1**

| Physicochemical analysis of the liquid waste (katsigaros) generated in 3-phase olive mills (Ref : Tsavdaris & Georgakakis, 1988) | | |
|---|---|---|
| **Analysis of the liquid waste (katsigaros)** | **Units** | **Value** |
| Total Solids (TS) | (% wt.) | 6,39 |
| Volatile Solids | (% wt.) | 5,60 |
| COD (Chemical Oxygen Demand) | (mg/l) | 99399 |
| BOTₜₒₜ (Total Biological Oxygen Demand) | (mg/l) | 42738 |
| Volatile Acids | (mg/l) | 5953 |
| Ammonium - N | (mg/l) | 47,87 |
| Nitric - N | (mg/l) | 65,50 |
| Total N | (% TS) | 1,21 |
| Organic C | (% TS) | 61,23 |
| C/N Ratio | ------ | 57,71 |
| P (as P₂O₂) | (mg/l) | 22,2 |
| K (as K₂O) | (mg/l) | 6371 |
| Na | (mg/l) | 296 |
| Ca | (mg/l) | 271 |
| Mg | (mg/l) | 234 |
| Fe | (mg/l) | 54 |
| Zn | (mg/l) | 4,7 |
| Mn | (mg/l) | 2,3 |
| Cu | (mg/l) | 1,6 |

The negative environmental impact of the above (illegal) practices is enormous, and encompasses (but is not limited to):
- Pollution of surface and underground water resources
- Manifestation of toxic phenomena in aquatic fauna
- Damage (ie. loss) to agricultural production and cultivations, due to the intense plant-toxicity of the katsigaros waste
- Visual and aesthetic devaluation of river and stream estuaries, and, consequently, devaluation of shorelines and beaches of significant tourist value
- Annoyance and nuisance to local inhabitants and excursionists alike, due to pungent, offensive odours of the katsigaros waste and large gatherings of insects.

A significant body of research and development has been accumulated in efforts, particularly in the last two decades, to treat effectively and render inert the katsigaros liquid waste.

One such attempt, which was first applied in Spain in the 1990s and is today the dominant mode of operation in olive mills throughout that country, is to convert the 3-phase extraction process to a 2-phase process. This can be achieved by using much less hot water (e.g. 10 kg of water-instead of 60 kg-per 100 kg of olives), and by combining the olive pomace and the katsigaros phases together. The 2-phase mills produce primary olive oil and slurry of about 60-65% wt. moisture, equivalent to a combination of olive pomace and reduced katsigaros. This slurry (2-phase olive pomace) is then processed in secondary Olive Pomace Processing Plants (called "repasso"), where centrifugal decanters are employed to effect the mechanical (not chemical, through hexane) separation of: a) the secondary olive oil, b) the olive pit, and c) an exhausted, de-oiled pulp, of about 60% wt. moisture, which in Greece is called "pulpa".
This pulpa, which is produced in very large quantities (e.g. 70 kg of pulpa produced per 100 kg of olives), is then taken to large central combustion facilities, where it is burned in complex fluidised-bed reactors, in the presence of specific anti-sintering agents, to generate heat and electricity.

Although, theoretically, the above 2-phase processing scheme (olives → 2-phase mills → 2-phase olive pomace → repasso → "pulpa" → combustion → heat & electricity) is technically effective in treating the katsigaros liquid waste, it presents a number of important difficulties and drawbacks that have not favoured the expansion in the last decade of its application in other olive oil-producing countries (apart from Spain) - especially around the Mediterranean basin. These difficulties and drawbacks stem from: a) the substantial cost and effect of converting old, traditional 3-phase olive mills to 2-phase operation (eg. need for a change of equipment, and the lower-quality of the 2-phase-produced olive oil), b) the need to establish and to operate a significant number of "repasso" plants, that will accept and process the 2-phase olive pomace as their main feedstock, c) the need to design, to build and to operate one or more large central combustion facilities, of high capital cost and questionable technological know-how, in order to burn the very large quantities of "pulpa" produced by the 2-phase mills.

For all the above reasons, technological efforts to deal with the problems associated with katsigaros liquid waste in, for example, Greece and many other olive oil-producing countries have focused on the traditional 3-phase olive processing scheme, and on the possible methods to separate the aqueous phase of the katsigaros liquid waste from its solid residue.

A variety of techniques have been attempted with this aim, including reverse osmosis, ultra filtration, cross filtration, coagulation, and esterification. All of these techniques are either: a) very energy-intensive (especially electricity-intensive), thus not economically viable in practice (e.g. reverse osmosis, ultra filtration, etc.), b) they use expensive expendable materials (e.g. high-tech membranes in reverse osmosis or in filtration), or c) they use expensive chemicals to effect the separation of the solid residue from the aqueous katsigaros, without producing economically valuable products (for revenue to offset the processing costs).

In general, the above methods and techniques have very high capital and operating costs (per tonne of katsigaros processed) and, in addition, invariably generate a useless by-product (i.e. some chemically altered form of the solid residue of katsigaros, without potential uses or market value) as well as a "dirty" aqueous solution, which itself poses a serious disposal problem. These are the main reasons why none of the above katsigaros treatment methods have ever proceeded to commercial application or even to pilot-plant testing.

### 3. Summary of the invention

Aspects of the present invention attempt to ameliorate the problems associated with the treatment of the liquid waste (ie. "katsigaros" liquid waste) generated during the production of olive oil in traditional 3-phase olive mills.
The method of the present invention may be used to treat the aforementioned waste comparatively efficiently and also produces useful by-products of commercial value (eg. olive oil, solid fuel, animal feed, electricity, usable heat).

A kernel of an embodiment of the present invention is the forced evaporation of the waste in a spray dryer under controlled conditions, using hot exhaust gases generated by, for example an internal combustion engine or a gas turbine or a furnace.

Utilising aspects of the present invention, up to 95% of the effluent waste (mostly water) may be evaporated. Any remaining solids, typically containing less than 10% humidity, have a significant energy content (eg. 5300-5600 Kcal/kg on a dry basis) so that it can be used as a fuel for space heating or for small scale industrial and agro industrial heating applications.

The electricity generated by the combustion engine (or engines) or the gas turbine (or turbines) can be sold to the local electricity grid and the heat obtained from the engine or turbine (such as from the water cooling system and the oil lubricating systems of the engine) or excess heat from the furnace can be sold for use in, for example greenhouses, or houses, or factories.

Aspects of the present invention also allow for the separation of the relatively small quantities of olive oil (eg. 1-2% by weight) typically contained in the original liquid waste (katsigaros). Advantageously, the majority part of these olive oil quantities contained in the original liquid waste (katsigaros) is separated. This oil can be sold for revenue to the local or international traders.

In order that the present invention may be more readily understood, embodiments thereof will be described, by way of example, with reference to the accompanying drawings and tables, in which:
Figure 1 shows a process diagram for a 3-phase olive mill.
Figure 2 shows a process diagram for the production of secondary oil from primary olive pomace.
Figure 3 shows photographs of the solid power (dried product) collected in accordance with aspects of the present invention.
Figure 4 depicts an unloading and pre-treatment process according to aspects of the present invention.
Figure 5 depicts a final treatment and energy generation system according to aspects of the present invention.
Figure 6.1. shows a table listing the composition of an exhaust system using natural gas in accordance with an embodiment of the present invention.
Figure 6.2. shows a table listing the composition of an exhaust system using diesel oil in accordance with an embodiment of the present invention.
Figure 6.3. shows a table listing the composition of an exhaust system using heavy fuel oil in accordance with an embodiment of the present invention.

### 4. Detailed description of the invention

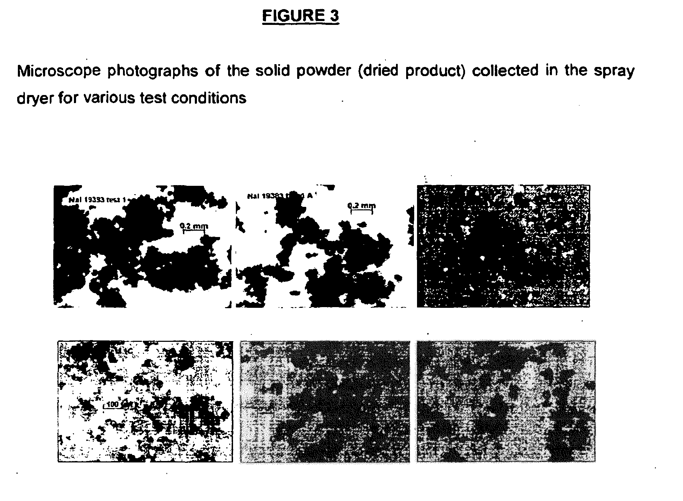

Embodiments of the present invention include a "katsigaros" treatment method divided into the following stages:
1. The fresh liquid waste (ie. the "katsigaros") is stored on site at the olive mill yards for a period of time (preferably, two days) in, for example, closed plastic or metal tanks and subsequently transported (for example, by truck) to a central processing plant where it is temporarily stored in appropriate closed tanks.
2. Most of the olive oil contained in the stored waste (typically 1-2% by weight) is separated from the main waste by means of oil skimmers and/or centrifugal separators. This olive oil, which is good quality, edible oil, is stored in appropriate tanks and may be subsequently sold.
3. The de-oiled katsigaros is fed into appropriately designed non-permeable lagoons or storage areas equipped with liners and surface covers, where it is kept until further treatment.
4. Internal combustion engines or gas turbines burn a preselected fuel (e.g. natural gas, propane gas, diesel, heavy fuel oil), to co-generate: a) electricity, b) hot combustion (fuel) gases and c) usable heat from the engine/turbine's water and lube oil cooling systems. If electricity is produced then this may be sold to the local electricity grid and the heat may be utilised in other enterprises (such as, local greenhouses or factories, or houses). In another embodiment of the invention one or more furnaces may be used (using also a preselected fuel), to generate hot combustion (fuel) gases as usable heat for drying and heating.
5. The hot combustion gases together with the de-oiled katsigaros are fed into a spray dryer where, with the addition of small quantities of anticaking agents (when necessary), the liquid phase of the waste (which is mostly water) is evaporated and the solids contained in the waste are separated, deposited and collected (for example at the bottom of the dryer, or at a baghouse, or at an electrostatic precipitator, or at a cyclon).
6. The exhaust gas and the vapours produced during the drying process (which are mostly water, air and CO₂ may pass through a baghouse and/or an electrostatic precipitator and/or a cyclon, to remove any remaining solid particles and are subsequently released to the atmosphere.
7. The collected solids are in the form of a grey-green, non-hygroscopic, stable powder which preferably contains less than 40% humidity and whose calorific content advantageously ranges between 5300-5600 kcal/kg. Representative microscope photographs of this powder are shown for different test conditions in Figure 3. The powder is pressed by means, for example, of hydraulic and/or electric presses into briquettes or pellets and sold as a heating fuel or animal feed.

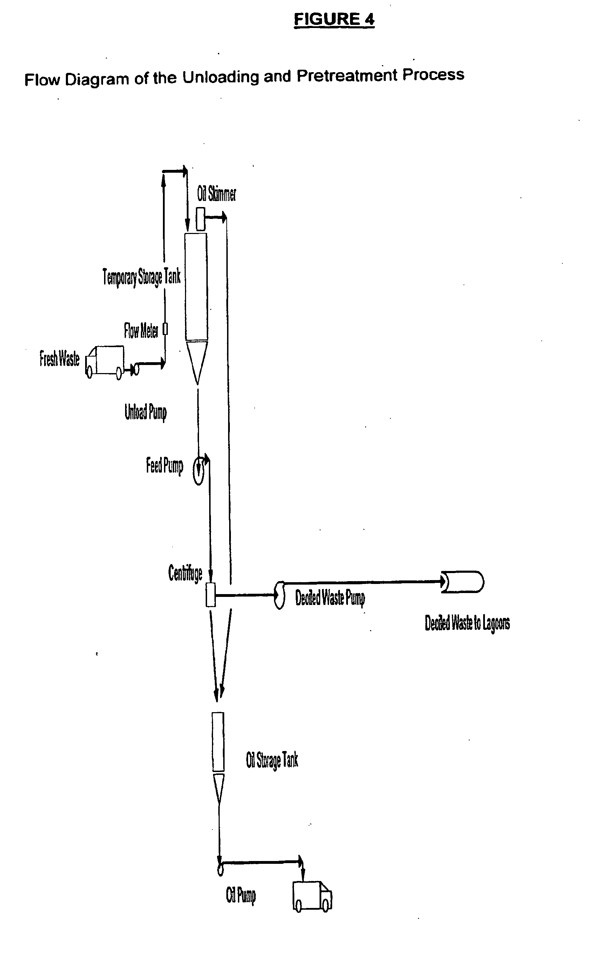

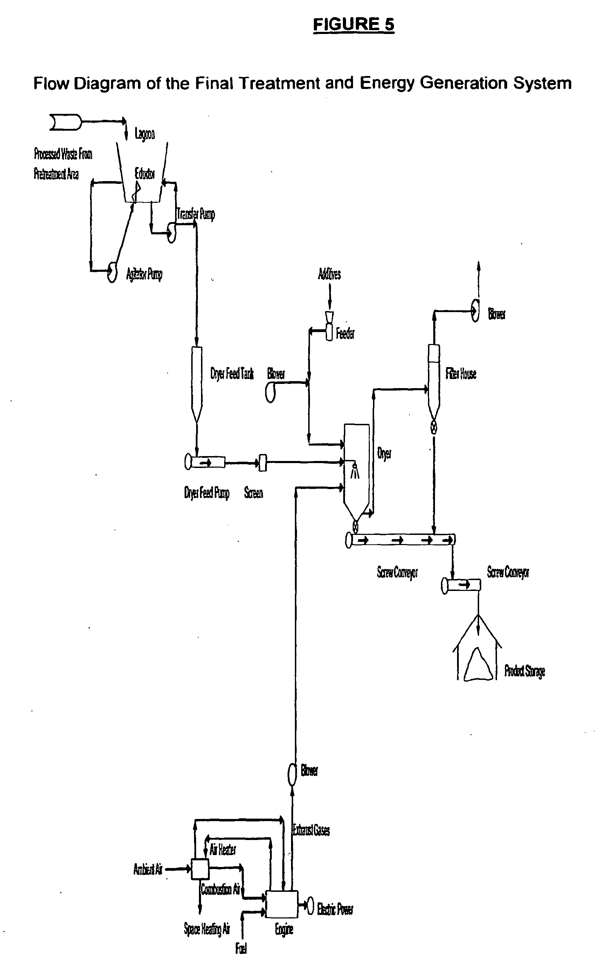

Embodiments of the present invention shall now be described with reference to Figure 4 and Figure 5.

Figure 4 depicts the "Unloading and Pre-treatment System", and Figure 5 depicts the "Final Treatment and Energy Generation System". Each of these processes is described below.

Embodiments of the "Unloading and Pre-treatment System" of the present invention include the following sub-systems: a waste receiving and temporary storage sub-system, a primary waste treatment sub-system, a secondary waste treatment sub-system, oil storage tanks, and pumping and transferring sub-systems. The unloading and pre-treatment system is connected to the final treatment and energy generation system with waste storage locations.

The waste receiving and temporary storage sub-system is the area in which the liquid waste arrives at the unloading and pre-treatment system (for example, by tanker truck or directly piped into the sub-system). A waste receiving unit of the sub-system meters and unloads the liquid waste into one or more temporary storage tanks by means of, for example, pumps and mass flow meters. The waste will usually remain in the temporary storage tanks for about one or two days. Of course, it will be appreciated that the length of time the waste is left in the temporary storage tanks can vary greatly depending upon a number of factors including, but not limited to, the amount of waste being received by the unloading and pre-treatment system compared with the throughput of the final treatment and energy generation system, and environmental considerations (such as ambient temperature).

The primary waste treatment sub-system comprises one or more skimmers towards the top of each temporary storage tank. When the waste is in the temporary storage tanks it undergoes phase separation. During phase separation stratification of the oil and the water phases occurs. Thus, a fraction of the oil contained in the waste rises to the top of the water phase from where it may be removed using the skimmers. The skimmers are preferably automated skimmers but may be manually operated.

Alternatively, the waste may be removed from the storage tank through, for example, a drain at the bottom of the tank to leave the oil that had risen to the top of the water phase, within the tank where it may later be drained.

The oil collected from the temporary storage tanks by the primary waste treatment sub-system is transferred, for example by gravity or using a pump (depending on the relative elevation of the tank) to the oil storage tanks for further treatment and handling.

The secondary waste treatment sub-system is required because the stratification and skimming of the oil and water phases in the temporary storage tanks is not sufficient to extract all of the available oil. In particular, the chemical and physical consistency of the waste coupled with a limitation on the retention time within the storage tanks and the requirement to treat the waste to extract more oil prior to the waste's prolonged storage in the waste storage locations, means that further processing to extract additional oil is required.

The secondary treatment consists of sets of oil separators (such as, centrifuges) and pumps. During this step, the pre-treated aqueous waste is fed into an oil separating device (for example a centrifuge, a decanter, skimmers, or other separator), where the oil phase and the aqueous phase are separated and transferred to the respective storages for further treatment.

The oil that is separated by the secondary treatment sub-system is transferred to the oil storage tanks where it is mixed with the oil that was extracted using the primary treatment sub-system.

The waste is now substantially free of suspended oil and is transferred from the secondary treatment sub-system to the waste storage locations which preferably comprise in-ground storage lagoons. These lagoons are lined with an impermeable liner to prevent leakage of the waste (and consequential soil contamination). Preferably the waste (which is now pre-treated waste) is stored for a prolonged period of time (advantageously, approximately one year) prior to its final processing.

As previously stated, Figure 5 depicts an embodiment of the "Final Treatment and Energy Generation System" of the present invention. Embodiments of this system include a long-term storage and agitation sub-system, a waste drying and auxiliary processes sub-system, a gas filtration sub-system, an energy co-generation sub-system, and a dry product storage sub-system.

Whenever the term "co-generation" is used in the description or claims of the present invention, it is used to describe the combined generation of more than one forms of energy, for example: electricity, heat, mechanical energy, chemical energy, etc.)

The waste from the unloading and pre-treatment system is stored in the waste storage locations which include an agitation system comprising a pump to maintain a uniform consistency of the waste prior to delivering the waste to the waste drying sub-system. In another embodiment of the invention, the said agitation system may comprise pumps, eductors, and nozzles to maintain a uniform consistency of the waste prior to delivering the waste to the waste drying sub-system.

Preferably, the waste drying and auxiliary processes sub-system is located close to the storage locations. In any case, the sub-system is connected to the storage locations (usually by one or more pipes). It will be appreciated that there might not be a permanent connection between the sub-system and storage locations and that the connection could comprise a batch-type transfer using a transfer vessel such as a tanker truck.

The drying sub-system includes a dryer feed tank, which operates as a buffer feed tank for the downstream processes and subsystems.

Downstream of the dryer feed tank is a dryer feed pipe in which there is a set of screens and filters to remove the large solid impurities from the waste, which are capable of damaging the processes and subsystems downstream.

The dryer feed pipe is connected to a drying module, comprising a spray dryer chamber (or vessel), an atomizer, ducts, pipes, and rotary valves. Inside the spray drying chamber the liquid waste is atomized according to the required specifications. The water is evaporated, preferably by direct or indirect, depending on the circumstances, contact with hot exhaust gases delivered by an internal combustion engine or gas turbine or furnace. Thus, the water is evaporated leaving behind a fine organic solid product having low moisture content.

It will be appreciated that it is possible to improve the process and prevent the fine organic solid product from agglomerating and sticking to the sides of the spray drying chamber, by utilising anticaking agents. These agents are mixed with the product while it is drying inside the dryer chamber. Preferably, the agents are added inside the chamber by, for example, loss-in-weight feeders, pneumatic conveying systems, hoppers, blowers, pick-up nozzles, etc.

During the drying process some of the dried organic solid settles to the bottom of the dryer chamber and is removed with rotary valves and screw conveyors. This removed solid is transferred to the dry-product storage sub-system for further processing and handling.

Preferably the spray dryer is characterised by co-current or counter-current flow. Inside the chamber the liquid is atomized (for example with rotary atomizer) to produce small droplets of liquid in form of fog. The feed of the liquid waste is supplied to the atomizer by means of, for example, pumps or other appropriate transferring devices. The exhaust gases are also fed into the chamber of the dryer (for example with fans or blowers) to come in direct or indirect contact with the atomized liquid waste to evaporate the water and leave behind the solid product.

Some of the dried solid (which has not settled inside the dryer chamber) remains mixed with the hot exhaust gas and is conveyed to the gas filtration sub-system which preferably comprises a bag house device for final separation and cleaning. In another embodiment of the invention, a cyclon and/or an electrostatic precipitator and/or a combination thereof may be used.

It will be understood that the gas filtration sub-system is located downstream the spray dryer and comprises, for example, a filter media, cages, a housing chamber, air blowers, air nozzles, rotary valves, electrostatic precipitator(s) and cyclon(s) (among other components).

As the mixed hot exhaust gas and solid organic material is passed through the gas filtration sub-system, the dried solid is retained on a surface of, for example the filter media and is discharged by air nozzles to the bottom of the housing. In the case of an electrostatic precipitator it is discharged by electricity, while in the case of a cyclon it is separated by centrifugal forces. The collected solid from the housing is discharged by rotary valves and screw conveyors, and is transferred to the dry product storage sub-system where it is mixed with the organic solid product previously collected from the bottom of the dryer chamber.

The exhaust gas, comprising exhaust gases practically free of dust (organic solid), is blown out of a stack by an air blower and vented into the atmosphere.

The energy generation sub-system preferably comprises one or more internal combustion engines or gas turbines or furnaces (partly depending on the local energy requirements), water cooling radiators, cooling towers, oil radiators, water purification systems, an air intake system, power generators, space heating heat exchangers, catalytic converters, and other auxiliary equipment required for the operation of such a sub-system.

Depending on the type of fuels available, this sub-system may be capable of utilizing natural gas, propane gas, diesel oil, or heavy fuel oil, or other fuel to power the engines, or the gas turbines, or the furnaces.

The hot exhaust gases leave the engines, or the gas turbines, or the furnaces and are channelled to the dryer chamber for use in the drying process of the waste.

Furthermore, the available heat from the engine's cooling water, and from the hot oil system, may be exchanged using radiators to preheat the air required for combustion and to condition the air required for the heating needs within the facility, and for other space heating needs, according to the desired heating requirements (for example, of the nearby residential, commercial or industrial community).

Electrical power may be distributed through the power distribution system to third - party users and/or may be used to satisfy internal energy requirements of the system of the present invention..

Aspects of the present invention will now be discussed in with reference to a case study. It will be appreciated that the case study represents example features of embodiments of the present invention and is by no means intended to be limiting upon the scope of the invention.

The case study presented below is for fresh liquid waste of 30,000.00 metric tons per year generated during the olive oil production season, which typically is from early November through to late February of the following year.

The consistency of this aqueous waste varies; however, its typical content of olive oil and fine organic solid particles is approximately 1% and 5% by weight respectively.

In this case, a system according to embodiments of the present invention is operated 336 days per year, 24 hours per day. The balance of the year (ie. 365 minus 336 days), 29 days, is typically dedicated to the maintenance of the process equipment, and for other typical services required by the equipment.

The fresh waste material, after arrival, is transferred to the temporary storage tanks of the unloading and pre-treatment system.

The daily incoming rate of the waste is expected to vary according to the seasonal production rate of olive oil. In this particular case, the fluctuation of the incoming waste flow ranges from 50 metric tons per day, during the slow periods (in the early and late period of the production season), to 500 metric tons per day during the peak of the season. Furthermore, it is anticipated that the waste is delivered to the facility within the delivery schedule of ten (10) hours per day; however, this schedule could be adjusted as needed.

During unloading, the waste is pumped through mass flow meters to record and monitor its weight, and by means of PLC the total weight is recorded in a central computer system.

After unloading and recording are completed, the fresh waste is stored in the temporary storage tanks for about one or two days.

After the waste is transferred to the temporary storage tanks, it undergoes phase separation, in which, about 50% of the contained oil stratifies, rising to the top of the water phase. The amount of the collected oil, due to the stratification process, is estimated about 150 metric tons per year.

The stratified oil from the waste storage tanks is removed by the use of oil skimmers, located at the top of the tanks, and consequently is transferred to the oil storage tanks for further handling.

The separation of the oil and water phase is not sufficient by the natural stratification process alone and, thus, the balance of the waste is forced to undergo a secondary treatment, in which, the remaining oil is removed prior to storing the waste in the lagoons.

In the secondary treatment, the waste is pumped through a set of centrifuges to remove the remaining suspended oil. The amount of oil is estimated to vary from 100 to 150 tons per year.

From the centrifugation station, the separated oil is transferred to the oil storage tanks where it is mixed with the balance of the oil collected from the waste storage tanks by the skimmers.

The remaining waste which contains the fine solids, but is practically free of suspended oil, is transferred from the centrifugation stations to the in-ground storage lagoons where it remains until is processed in the drying system. The lagoons are equipped with agitation systems consisting of pumps, pipes, eductors and nozzles, to ensure that the fine solids are evenly suspended within the remaining liquid waste. The agitation system operates intermittently and is activated according to the process needs.

The waste from the lagoons is transferred during the entire year to a dryer buffer feed tank and subsequently to a spray dryer, through an atomizer, at an estimated rate of 3.720 kg/hr. The heating media utilized in this process is hot exhaust gases generated by a set of internal combustion engines or gas turbines or furnaces. This stream is blown into the spray dryer simultaneously with the waste, at a rate of 32.050 kg/hr and at an approximate temperature of 425 °C.

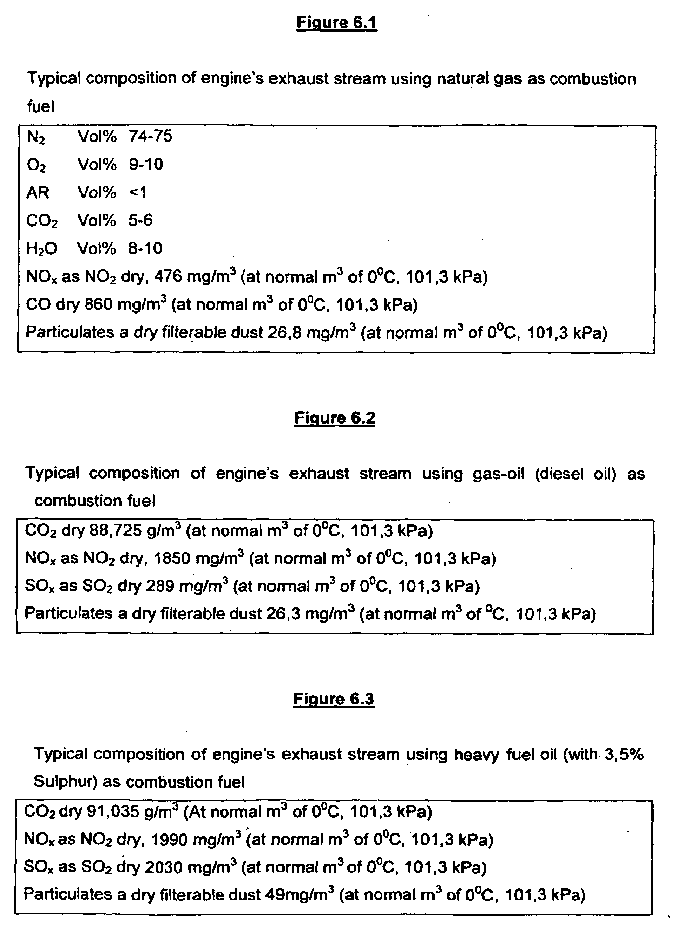

Depending on the fuel used to power the engines or the gas turbines or the furnacess, the consistency of the exhaust gases is expected to vary. Typical consistencies of various exhaust gases by use of different kinds of fuels are presented in Figure 6.1, Figure 6.2 and Figure 6.3.

Downstream the dryer buffer feed tank, in the dryer supply pipe, is a set of screens and filters to retain the undesirable impurities contained within the waste. These screens are intended to be inspected periodically and cleaned as required.

Downstream the screens is the actual drying system, consisting of a dryer chamber, atomizer, rotary valves, ducts, pipes, and various auxiliaries required for its operation.

Inside the drying chamber the liquid waste is atomized, and by the direct contact of the hot exhaust gases with the waste, the water is evaporated leaving behind a fine organic solid with moisture content between 0%- 40% by weight.

During drying, to keep the solid product from caking, lumping, or sticking to the walls or bottom of the chamber, suitable anti-caking agents can be added via pneumatic systems. The required flow rate of these agents may vary from 0% - 2% of the rate of flow of the final processed product, or in terms of actual flow, it may vary from 1 kg/hr to 3 kg/hr.

During the drying process, a fraction of the dried organic solid product settles to the bottom of the chamber where it is collected by the rotary valves and transferred to the screw conveyors. The amount of dried product collected from the bottom of the chamber depends on the size of the solid particles within the waste, the final moisture content and the physical configuration of the chamber. In any case, this flow is expected to vary from 0 kg/hr to 100 kg/hr. The balance of the dried product remains mixed with the gas stream and is conveyed to a gas filtration system for further separation and cleaning.

The in-flow of gases, water vapour, and solids to the filtration system is estimated to be approximately 35.670 Kg/hr. The mixed in-flow passes through a filtering media (bags, envelopes, or other) inside the filter chamber, on which the solid product is retained and discharged to the bottom of the housing by means of air nozzles. The amount of dried product collected in the filter chamber could vary from 110 kg/hr to 210 kg/hr.

The product from the bottom of the chamber is transferred to a storage area where it is mixed with the solid collected from the bottom of the drying chamber.
The exhaust gas (with the water vapour) is vented to the atmosphere at an estimated rate of 35.560 kg/hr and at 120 °C, after the final filtration treatment.

The energy generation system could either be internal combustion engines or gas turbines or furnaces, depending on the local energy requirements.

The system may include cooling radiators, cooling towers, oil radiators, a make-up water deionization and purification system, an air intake system and filters, a fuel supply and distribution system, power generators, space heating heat exchangers, catalytic converters, and other auxiliary equipment required for its operation.

Depending on the type of fuels available in the area, this system is capable of utilizing natural gas, propane gas, diesel oil, heavy fuel oil, or other fuels to power the engines.

In the case of natural gas, the system is anticipated to generate hot exhaust gases at an approximate temperature of 425 °C, having the consistency as indicated in Figure 6.1. The flow rate of these gases is estimated to be approximately 32,050 kg/hr. The hot gases, after they are exhausted from the engines, are delivered to the dryer chamber for drying.

The available heat from the cooling water and from the hot oil of the engines, is exchanged through the radiators to preheat a) the combustion air required by the engines and b) to condition the air required for space heating, within the operating facility, as well as for various space heating needs according to the heating requirements of the adjacent buildings and the nearby community.

The electric energy produced by the power generators of the engines is estimated to be 6 - 6,5 MW with an efficiency of 40% - 45%.

The parasitic load needed for the electrical requirements of the facility itself is estimated to be about 5% of the total electrical power produced (ie. approximately 300 KW to 350 KW). The balance of the power is distributed to the third-party users, for example, local power grid.

It will be appreciated that the heat generation sub-system need not comprise an internal combustion engine or gas turbine or furnace and the provision of any apparatus or heat source capable to heating the waste to a sufficient temperature will suffice.

The present invention has been described above as a single facility; it will be understood that different sub-systems or systems of the present invention may be geographically separated.

Aspects of the present invention have been specifically directed toward the treatment of a particular waste liquid. It will be appreciated that the present invention is also suitable for use in the treatment of similar organic waste liquids. Indeed, it will also be understood that the sub-systems of the present invention may be re-ordered (and some may even be omitted) to account for different waste liquids or even different types of the same waste liquid.

It will be understood that embodiments of the present invention seek to achieve a method of treating liquid waste using spray drying in order to result in a useful solid fuel as a by-product; as well as combining the application of spray drying with co-generation of heat and power, in order to improve the overall energy efficiency and the economics of the "katsigaros" treatment process; moreover aspects of the invention utilise relatively low cost, environmentally friendly technologies, namely oil skimmers and centrifugal separators, to separate effectively the small quantities of olive oil (1-2% by weight) contained in the liquid waste; in contrast to all other techniques proposed to date to deal with the "katsigaros" waste, all of the by-products of the treatment process (olive oil, electricity, solid fuel, heat) are useful and have considerable commercial value; and aspects of the present invention do not require the use of expensive expendable materials or of expensive chemicals, thus reducing operating expenses and solidifying the economic viability of its application.

It will be readily understood that the application of aspects of the invention can be expected to have a very positive impact on the natural and social environment in olive oil producing regions.

The present invention also seeks to reduce the pollution of surface and underground water resources and the damage to agriculture, resulting from the current non-regulated, disposal practices of vast quantities of the highly polluting liquid waste and the associated effects on public health.

Moreover, the present invention seeks to reduce both the visual and aesthetic devaluation of rivers, stream estuaries, shorelines and beaches, which may be of significant tourist value, as well as the pungent offensive odours and large gathering of insects, which are annoying to local inhabitants and excursionists alike.

Furthermore, use of the present invention seeks to have a positive impact on the economies of olive oil producing regions vis-à-vis the creation of new employment opportunities, the generation of new income and the enhancement of regional electricity supply.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of treating the aqueous waste produced by the traditional 3-phase extraction of olive oil from olives, comprising the steps of:
a) removing olive oil from the aqueous waste by skimmers and/or centrifugal separators;
b) spray-drying the remaining aqueous waste with the introduction of anti-caking agents to reduce caking of the dried product;
c) collecting the dried product which results;
and the use of the hot exhaust gases generated from an internal combustion engine or from a gas turbine or from a furnace to perform the heating for step b).

2. A method according to claim 1, wherein step (a) comprises skimming the olive oil from the surface of a body of aqueous waste.

3. A method according to claim 1, wherein step (a) comprises centrifugation.

4. A method according to claim 1, wherein step (a) comprises removing afraction of the olive oil contained in the aqueous waste.

5. A method according to claim 1, wherein step b) is preceded by agitating the remaining aqueous waste, to cause suspension of solids.

6. A method according to claim 5, wherein the agitation is carried out on the aqueous waste in a storage lagoon, by means of a circulating pump.

7. A method according to claim 5, wherein the agitation is carried out on the aqueous waste in a storage lagoon, by means of a circulating pump, nozzles and eductors.

8. A method according to any preceding claim, wherein exhaust gases generated by one or more internal combustion engines or gas turbines or furnaces are utilised in step (b) to provide generation of hot combustion gases as usable heat.

9. A method according to claim 8, wherein one or more internal combustion engines or gas turbines are used for co-generation of electricity and heat.

10. A method according to any preceding claim, wherein the dried product contains between 0 and 40 wt% moisture.

11. A method according to any preceding claim, wherein the dried product contains between 5 and 10 wt% moisture.

12. A method according to any preceding claim, wherein step (c) is followed by the step of compressing the dried product to form pellets or briquettes for use as a fuel.

13. A method according to any preceding claim, wherein the dried product is used for animal feed.

14. A method according to any preceding claim wherein the aqueous waste is katsigaros, or liozoumi, or mourka, or alpechin, or jamila.

15. A system for the treatment of aqueous waste produced by traditional 3-phase extraction of olive oil from olives, the system comprising:
a storage container to hold the aqueous waste and allow a fraction of olive oil contained therein to form a layer on top of the aqueous waste such that at least some portion of the volume of oil can be separated from the aqueous waste; and
a drying vessel linked to the storage container comprising a) a heating arrangement comprising a hot exhaust gas system to heat the aqueous waste produced in the extraction of olive oil, b) an arrangement to spray-dry the aqueous waste and add an anticaking agent in the aqueous waste to reduce caking of the dried product, such that a dried product from the aqueous waste is deposited; and
a collection arrangement to collect the dried product deposited from the aqueous waste.

16. A system according to claim 15 wherein the storage container includes a drain for removal of at least a portion of the aqueous waste to retain at least a portion of the volume of oil within the storage container.

17. A system according to claim 15 wherein the storage container includes one or more skimmers operable to skim at least a portion of the volume of olive oil from the top of the aqueous waste for removal from the storage container.

18. A system according to any one of claims 15 to 17 further comprising a centrifugal separator to separate the aqueous waste from at least a portion of the volume of olive oil contained therein.

19. A system according to Claim 15 further comprising a filtration system to filter the hot gases for the removal at least a portion of any waste contained
therein,

20. A system according to any one of claims 15 or 19, wherein the hot gas system comprises an internal combustion engine or gas turbine or furnace operable to output hot exhaust gases.

21. A system according to any one of claims 19 or 20 wherein the hot gas system allows a gas to heat the aqueous waste by direct or indirect contact.

22. A system according to any one of claims 15 to 21 further comprising a storage area including agitators, the storage area being linked to the storage container and the drying vessel and operable to store the aqueous waste and agitate the aqueous waste to ensure a generally even distribution of waste within the aqueous waste prior to the waste being sent to the drying vessel.

23. A system according to any on of claims 15 to 22 wherein the drying vessel is operable to cause the dried product deposited from the aqueous waste to have a water content of generally 0% - 40% by weight.

24. A system according to any one of claims 15 to 22 wherein the drying vessel is operable to cause the dried product deposited from the aqueous waste to have a water content of generally 5% - 10% by weight.

25. A system according to any one of claims 15 to 24 wherein the aqueous waste is katsigaros, or liozoumi, or mourka, or alpehin, or jamila.

26. A system according to any one of claims 15 to 25 wherein the drying vessel comprises a spray drying chamber.

## Patentansprüche

1. Verfahren zur Behandlung des wässrigen Abfalls, hergestellt durch die herkömmliche dreiphasige Extraktion von Olivenöl aus Olive, umfassend die Schritte:
a) Entfernen des Olivenöls aus dem wässrigen Abfall durch Abschäumer und/oder Zentrifugalseparatoren;
b) Sprühtrocknen des übrigen wässrigen Abfalls unter Einführung von Antibackmitteln bzw. Antiklumpmitteln, um das Zusammenbacken des getrockneten Erzeugnisses zu reduzieren;
c) Sammeln des getrockneten Erzeugnisses, welches daraus resultiert;
und die Verwendung der heißen Abgase, welche von einem Verbrennungsmotor oder einer Gasturbine oder einem Ofen erzeugt werden, zur Durchführung der Erwärmung des Schrittes b).

2. Verfahren nach Anspruch 1 wobei Schritt (a) das Abschäumen des Olivenöls von der Oberfläche eines Körpers aus wässrigem Abfall umfasst.

3. Verfahren nach Anspruch 1, wobei Schritt (a) Schleudern bzw. Zentrifugieren umfasst.

4. Verfahren nach Anspruch 1, wobei Schritt (a) das Entfernen eines Teils des Olivenöls umfasst, welches in dem wässrigen Abfall enthalten ist.

5. Verfahren nach Anspruch 1, wobei dem Schritt (b) das Rühren des übrigen wässrigen Abfalls vorangeht, um eine Suspension der Feststoffe zu bewirken.

6. Verfahren nach Anspruch 5, wobei das Rühren an dem wässrigen Abfall in einer Speicherlagune mittels einer zirkulierenden Pumpe durchgeführt wird.

7. Verfahren nach Anspruch 5, wobei das Rühren an dem wässrigen Abfall in einer Speicherlagune mittels einer zirkulierenden Pumpe, Düsen und Eduktoren durchgeführt wird.

8. Verfahren nach einem der vorangehenden Ansprüche, wobei die von einem oder mehreren Verbrennungsmotoren oder Gasturbinen oder Ofen erzeugte Abgase in dem Schritt (b) eingesetzt werden, um die Erzeugung von heißen Verbrennungsgasen als nutzbare Wärme bereitzustellen.

9. Verfahren nach Anspruch 8, wobei ein oder mehrere Verbrennungsmotoren oder Gasturbinen zur Koerzeugung von Elektrizität und Wärme verwendet werden.

10. Verfahren nach ein der vorangehenden Ansprüche, wobei das getrocknete Produkt zwischen 0 und 40 Gew.-% Feuchtigkeit enthält.

11. Verfahren nach einem der vorangehenden Ansprüche, wobei das getrocknete Produkt zwischen 5 und 10 Gew.-% Feuchtigkeit enthält.

12. Vorfahren nach einem der vorangehenden Ansprüche, wobei Schritt (c) von dem Schritt des Verdichtens des getrockneten Produkts gefolgt wird, um Pellets oder Briketts zur Verwendung als ein Brennstoff zu bilden.

13. Verfahren nach einem der vorangehenden Ansprüche, wobei das getrocknete Produkt als Tiernahrung verwendet.

14. Verfahren nach einem der vorangehenden Ansprüche, wobei der wässrige Abfall Katsigaros oder Lizoumi oder Mourka oder Alpechin oder Jamila ist.

15. System zur Behandlung eines wässrigen Abfalls erhalten durch die herkömmliche dreiphasige Extraktion von Olivenöl aus Oliven, wobei das System umfasst:
einen Speicherbehälter um den wässrigen Abfall zu halten und zu erlauben, dass ein Teil des darin enthaltenen Olivenöls eine Schicht auf dem wässrigen Abfall bildet, so dass wenigstens ein Teil des Volumens des Öls von dem wässrigen Abfall getrennt werden kann; und
einen Trocknungsbehälter verbunden mit dem Speicherbehälter umfassend a) eine Wärmoanordnung umfassend ein heißes Abgassystem, um den bei der Extraktion des Olivenöls erzeugten wässrigen Abfalls zu erwärmen, b) eine Anordnung, um den wässrigen Abfall Sprühzutrocknen und Zugeben eines Antibackmittels in den wässrigen Abfall, um das Zusammenbacken des getrockneten Produkts zu reduzieren, so dass ein getrocknetes Erzeugnis aus dem wässrigen Abfall abgeschieden wird; und
eine Sammlungsanordnung, um das getrocknete Erzeugnis zu sammeln, welches von dem wässrigen Abfall abgeschieden wurde.

16. System nach Anspruch 15, wobei der Speicherbehälter einen Ablass zum Ablassen wenigstens eines Teils des wässrigen Abfalls umfasst, um wenigstens einen Teil des Volumens des Öls in dem Speicherbehälter zurückzufalten.

17. System nach Anspruch 15, wobei der Speicherbehälter ein oder mehrere Abschäumer umfasst, welche betreibbar sind, um wenigstens einen Teil des Volumens des Olivenöls von der Oberseite des wässrigen Abfalls abzuschäumen, um diesen von den Speicherbehälter zu entfernen.

18. System nach einem der Ansprüche 15 bis 17, des Weiteren umfassend einen Zentrifugalseparator, um den wässrigen Abfall von wenigstens einem Teil des Volumens des darin enthaltenen Olivenöls zu trennen.

19. System nach Anspruch 15, des Weiteren umfassend ein Filtrationssystem, um die heißen Gase zur Entfernung wenigstens eines Teils des darin enthaltenden Abfalls zu filtrieren.

20. System nach einem der Ansprüche 15 oder 19, wobei das Heißgassystem einen Verbrennungsmotor oder Gasturbine oder Ofen umfasst, welche betreibbar ist, um heiße Abgase freizusetzen.

21. System nach einem der Ansprüche 19 oder 20, wobei es das Heißgassystem ermöglicht, dass ein Gas den wässrigen Abfall durch direkten oder indirekten Kontakt erwärmt.

22. System nach einem der Ansprüche 15 bis 21, des Weiteren umfassend einen Speicherbereich enthaltend Rührer, wobei der Speicherberreich mit dem Speicherbehälter und dem Trocknungsbehälter verbunden ist und betreibbar ist, um den wässrigen Abfall zu speichern und den wässrigen Abfall zu rühren, um eine im Allgemeinen gleichmäßige Verteilung des Abfalls innerhalb des wässrigen Abfalls sicherzustellen, bevor der Abfall in den Trocknungsbehälter geschickt wird.

23. System nach einem der Ansprüche 15 bis 22, wobei der Trocknungsbehälter betreibbar ist, um zu bewirken, dass das getrocknete Produkt, welches von dem wässrigen Abfall abgeschieden wird, einen Wassergehalt im Allgemeinen von 0 bis 40 Gew.-% aufweist.

24. System nach einem der Ansprüche 15 bis 22, wobei der Trocknungsbehälter betreibbar ist, um zu bewirken, dass das getrocknete Erzeugnis abgeschieden von dem wässrigen Abfall einen Wassergehalt von im Allgemeinen 5 bis 10 Gew.-% aufweist.

25. System nach einem der Ansprüche 15 bis 24, wobei der wässrige Abfall Katsigaros oder Liozoumi oder Mourka oder Alpechiry oder Jamila ist.

26. System nach einem der Ansprüche 15 bis 25, wobei der Trocknungsbehälter eine Sprühtrocknungskammer umfasst.

## Revendications

1. Procédé de traitement du déchet aqueux produit par l'extraction en 3 phases traditionnelle de l'huile d'olive à partir d'olives, comprenant les étapes de:
a) retrait de l'huile d'olive du déchet aqueux par des absorbeurs et/ou des séparateurs centrifuges;
b) séchage par pulvérisation du déchet aqueux restant avec introduction d'agents anti-prise en masse pour réduire la prise en masse du produit séché;
c) collecte du produit séché qui en résulte;
et l'utilisation des gaz d'échappement chauds produits par un moteur à combustion interne ou par une turbine à gaz ou par un four pour accomplir le chauffage pour l'étape b).

2. Procédé selon la revendication 1, où l'étape (a) comprend l'absorption de l'huile d'olive de la surface d'un corps de déchet aqueux.

3. Procédé selon la revendication 1, où l'étape (a) comprend une centrifugation.

4. Procédé selon la revendication 1, où l'étape (a) comprend le retrait d'une fraction de l'huile d'olive contenue dans le déchet aqueux.

5. Procédé selon la revendication 1, où l'étape b) est précédée par une agitation du déchet aqueux restant, pour produire une suspension de solides.

6. Procédé selon la revendication 5, où l'agitation est accomplie sur le déchet aqueux dans une lagune de stockage, au moyen d'une pompe de circulation.

7. Procédé selon la revendication 5, où l'agitation est accomplie sur le déchet aqueux dans une lagune de stockage, au moyen d'une pompe de circulation, de buses et d'extracteurs.

8. Procédé selon l'une quelconque des revendications précédentes, où les gaz d'échappement produits par un ou plusieurs moteurs à combustion interne ou turbines à gaz ou fours sont utilisés dans l'étape (b) pour assurer la production de gaz de combustion chauds sous forme de chaleur utilisable.

9. Procédé selon la revendication 8, où un ou plusieurs moteurs à combustion interne ou turbines à gaz sont utilisés pour la co-production d'électricité et de chaleur.

10. Procédé selon l'une quelconque des revendications précédentes, où le produit séché contient entre 0 et 40 % en poids d'humidité.

11. Procédé selon l'une quelconque des revendications précédentes, où le produit séché contient entre 5 et 10 % en poids d'humidité.

12. Procédé selon l'une quelconque des revendications précédentes, où l'étape (c) est suivie par l'étape de compression du produit séché pour former des boulettes ou des briquettes destinées à être utilisées comme combustible.

13. Procédé selon l'une quelconque des revendications précédentes, où le produit séché est utilisés pour l'alimentation animale.

14. Procédé selon l'une quelconque des revendications précédentes où le déchet aqueux est Katsigaros, ou liozoumi, ou Mourka, ou alpechin ou jamila.

15. Système pour le traitement de déchet aqueux produit par extraction en 3 phases traditionnelle de l'huile d'olive à partir d'olives, le système comprenant:
un récipient de stockage pour contenir le déchet aqueux et permettre à une fraction de l'huile d'olive contenue à l'intérieur de former une couche sur le dessus du déchet aqueux de sorte qu'au moins une certaine partie du volume d'huile peut être séparée du déchet aqueux; et
un récipient de séchage lié au récipient de stockage comprenant a) un agencement chauffant comprenant un système de gaz d'échappement chaud pour chauffer le déchet aqueux produit dans l'extraction de l'huile d'olive, b) un agencement pour sécher par pulvérisation le déchet aqueux et ajouter un agent anti-prise en masse dans le déchet aqueux pour réduire la prise en masse du produit séché, de sorte qu'un produit séché provenant du déchet aqueux est déposé; et
un agencement de collecte pour collecter le produit séché déposé à partir du déchet aqueux.

16. Système selon la revendication 15 où le récipient de stockage inclut un drain pour le retrait d'au moins une partie du déchet aqueux pour maintenir au moins une partie du volume d'huile à l'intérieur du récipient de stockage.

17. Système selon la revendication 15 où le récipient de stockage inclut un ou plusieurs absorbeurs pouvant fonctionner pour absorber au moins une partie du volume de l'huile d'olive du dessus du déchet aqueux pour le retrait du récipient de stockage.

18. Système selon l'une quelconque des revendications 15 à 17 comprenant en outre un séparateur centrifuge pour séparer le déchet aqueux d'au moins une partie du volume d'huile d'olive contenu à l'intérieur.

19. Système selon la revendication 15 comprenant en outre un système de filtration pour filtrer les gaz chauds pour le retrait d'au moins une partie de tout déchet contenu à l'intérieur.

20. Système selon l'une quelconque des revendications 15 ou 19, où le système de gaz chaud comprend un moteur à combustion interne ou une turbine à gaz ou un four pouvant fonctionner pour produire des gaz d'échappement chauds.

21. Système selon l'une quelconque des revendications 19 ou 20 où le système de gaz chaud permet à un gaz de chauffer le déchet aqueux par contact direct ou indirect.

22. Système selon l'une quelconque des revendication 15 à 21 comprenant en outre une zone de stockage influant des agitateurs, la zone de stockage étant reliée au récipient de stockage et au récipient de séchage et pouvant fonctionner pour stocker le déchet aqueux et agiter le déchet aqueux pour garantir une distribution généralement uniforme de déchet dans le déchet aqueux avant que le déchet soit envoyé au récipient de séchage.

23. Système selon l'une quelconque des revendications 15 à 22 où le récipient de séchage peut fonctionner pour amener le produit séché déposé à partir du déchet aqueux à avoir une teneur en eau généralement de 0% - 40% en poids.

24. Système selon l'une quelconque des revendications 15 à 22 où le récipient de séchage peut fonctionner pour amener le produit séché déposé à partir du déchet aqueux à avoir une teneur en eau généralement de 5% -10% en poids.

25. Système selon l'une quelconque des revendications 15 à 24 où le déchet aqueux est Katsigaros, ou liozoumi, ou mourka, ou alpechin ou jamila,

26. Système selon l'une quelconque des revendications 15 à 25 où le récipient de séchage comprend une chambre de séchage par pulvérisation.
